# EUROPEAN PATENT APPLICATION

(11) **EP 4 700 354 A2**
(43) Date of publication of application: **25.02.2026**
(21) Application number: 25188785.7
(22) Date of filing: 10.07.2025
(51) Int. Cl.: G01M 17/007, B60T 7/16, B60T 17/22

(54) **CONTROL DEVICE, INSPECTION SYSTEM, MOVING OBJECT, INSPECTION METHOD, AND METHOD FOR MANUFACTURING MOVING OBJECT**

(30) Priority: 22.08.2024 JP 2024140629
(71) Applicant: TOYOTA JIDOSHA KABUSHIKI KAISHA, Toyota-shi, Aichi-ken 471-8571 (JP)
(72) Inventor: KOIDE, Toshihiro, Toyota-shi, 471-8571 (JP); KOYAMA, Keisuke, Toyota-shi, 471-8571 (JP); IWAHORI, Kento, Toyota-shi, 471-8571 (JP)
(74) Representative: J A Kemp LLP

(57) **Abstract**

A control device for inspecting a braking force of a moving object includes: a drive controller configured to remotely control a drive system in the braking force inspection such that a predetermined magnitude of torque is applied to at least one wheel included in the moving object, the drive system being configured to apply a torque for rotating the at least one wheel to the at least one wheel; and a brake controller configured to remotely control a brake system in the inspection, the brake system being configured to generate the braking force in the moving object.

## Description

### BACKGROUND

### FIELD

The present disclosure relates to a control device, an inspection system, a moving object, an inspection method, and a method for manufacturing the moving object.

### RELATED ART

Japanese Patent Application Publication (Translation of PCT Application) No. 2017-538619 describes a method for remotely operating a vehicle running in a manufacturing system.

When inspecting a brake system assembled in a vehicle during a vehicle manufacturing or inspection process, an inspector activates the brake system. For example, depressing the brake pedal to activate the brake may result in variations in applied force among inspectors. This issue is common not only to vehicles but also to moving objects.

### SUMMARY

The present disclosure can be implemented by having the following aspects.
(1) According to an aspect of the present disclosure, a control device for inspecting a braking force of a moving object is provided. The control device includes: a drive controller configured to remotely control a drive system in the braking force inspection such that a predetermined magnitude of torque is applied to at least one wheel included in the moving object, the drive system being configured to apply a torque for rotating the at least one wheel to the at least one wheel; and a brake controller configured to remotely control a brake system in the inspection, the brake system being configured to generate the braking force in the moving object. According to this embodiment, the braking force is applied to the at least one wheel through the control by the brake controller. Therefore, the braking force is applied without relying on a manual operation of the brake pedal, thereby enabling suppression of variations in braking force. This allows for improved accuracy of the braking force inspection.
(2) The control device of the above embodiment may further include: an acquirer configured to acquire rotation information associated with a rotated state of the at least one wheel; and a determiner configured to perform a determination process to determine whether or not the braking force satisfies a predetermined inspection criterion using the rotation information in a state where the torque and the braking force are applied to the at least one wheel. According to this embodiment, the determiner is able to determine whether the inspection criterion is satisfied or not using the rotation information.
(3) In the control device of the above embodiment, the at least one wheel may include a plurality of wheels, and the drive controller may independently control each of the plurality of wheels. According to this embodiment, the braking force inspection is enabled for each of the plurality of wheels.
(4) In the control device of the above embodiment, the determiner may determine in the determination process that the inspection criterion is satisfied when the at least one wheel does not rotate. According to this embodiment, it is possible to confirm that the brake system has a predetermined braking force by determining that the wheel does not rotate.
(5) In the control device of the above embodiment, the at least one wheel may include a right wheel and a left wheel, and the control device repeatedly performs an inspection processing routine by changing a magnitude of the torque, wherein, in the inspection processing routine, the drive controller may control the drive system such that a predetermined torque is applied to the at least one wheel, the brake controller may control the brake system so as to apply a predetermined braking force to the at least one wheel, and the determiner may determine in the determination process that the inspection criterion is satisfied when a difference between a minimum value of a torque at which the right wheel is determined to rotate and a minimum value of a torque at which the left wheel is determined to rotate is equal to or less than a predetermined threshold value. According to this embodiment, it is possible to determine whether or not the difference in braking force between the right and left wheels satisfies the inspection criterion.
(6) The control device of the above embodiment may further include: an inspection information creator configured to create inspection information that associates information related to the torque, information related to the braking force, and information related to the determination made by the determiner with one another. According to this embodiment, the creation of the inspection information is enabled.
(7) In the control device of the above embodiment, the drive system may include an electric motor that generates the torque.
(8) In the control device of the above embodiment, the moving object may include the drive system. According to this embodiment, the electric motor included in the moving object is operated, thereby allowing torque to be applied to the wheel. Therefore, the braking force inspection is enabled without using a device that is separate from the vehicle and applies a torque to the wheel.
(9) In the control device of the above embodiment, the drive system may further include an inspection rotor, and the electric motor may drive the inspection rotor. According to this embodiment, the braking force inspection is enabled by using the drive system separate from the moving object.
(10) According to the second embodiment, a control device is provided to inspect a braking force of a moving object. The control device includes: a drive controller configured to control a drive system that applies a torque for rotating at least one wheel included in the moving object to the at least one wheel; a brake controller configured to control a brake system that generates the braking force to the moving object; an acquirer configured to acquire information associated with an acceleration of the moving object; and a determiner configured to perform a determination process to determine whether or not the braking force satisfies a predetermined inspection criterion using the information associated with the acceleration of the moving object in a state where the torque and the braking force are applied to the at least one wheel.
(11) In the control device of the above embodiment, the acquirer may acquire, as the information associated with the acceleration of the moving object, rotation information until the moving object is stopped by applying the torque to at least one wheel and then applying the braking force to the at least one wheel, and the determiner may perform the determination process by using the rotation information. According to this embodiment, the inspection of the braking stop distance is enabled.
(12) According to the third embodiment of the present disclosure, an inspection system for inspecting a braking force of a moving object is provided. The inspection system includes: a drive system that applies a torque for rotating at least one wheel included in the moving object to the at least one wheel, an acquirer configured to acquire rotation information associated with a rotated state of the at least one wheel; and a control device. The moving object has a brake system that generates the braking force, the control device includes a drive controller that controls the drive system, and a brake controller configured to control the brake system, and the inspection system further includes a determiner configured to perform a determination process to determine whether or not the braking force satisfies a predetermined inspection criterion using the rotation information in a state where the torque and the braking force are applied to the at least one wheel. According to this embodiment, the braking force is applied to at least one wheel through the control by the brake controller. Thus, braking force is applied without relying on a manual operation of the brake pedal, thereby enabling suppression of variations in braking force. Therefore, the braking force is applied without relying on a manual operation of the brake pedal, thereby enabling suppression of variations in braking force. Further, the braking force inspection is enabled using the determiner included in the moving object.
(13) According to the fourth embodiment of the present disclosure, a moving object is provided. The moving object includes: at least one wheel to which a torque is applied by a drive system through control of the drive system by a drive controller; a brake system controlled by a brake controller and configured to generate a braking force in the moving object; an acquirer configured to acquire rotation information associated with a rotated state of the at least one wheel; and a determiner configured to perform a determination process to determine whether or not the braking force satisfies a predetermined inspection criterion using the rotation information in a state where the torque and the braking force are applied to the at least one wheel.
(14) According to the fifth embodiment of the present disclosure, an inspection method for inspecting a braking force of a moving object is provided. The moving object includes at least one wheel, a drive system that applies a torque to the at least one wheel, and a brake system that generates the braking force therein, the inspection method including the steps of: remotely controlling the brake system; remotely controlling the drive system; acquiring rotation information associated with a rotated state of the at least one wheel; and performing a determination process to determine whether or not the braking force satisfies a predetermined inspection criterion using the rotation information.
(15) According to the sixth embodiment of the present disclosure, a method for manufacturing a moving object is provided. The manufacturing method includes the steps of: assembling the moving object such that the moving object includes the brake system that generates the braking force; and inspecting an operation of the moving object assembled to include the brake system, wherein the inspection step includes at least the inspection method described above.

The present disclosure can also be implemented in various forms other than the embodiments described above. For example, it may be implemented in the form of an inspection method, a program for the inspection method, or a non-transitory tangible recording medium storing the program for the inspection method in a computer-readable format.

### BRIEF DESCRIPTION OF THE DRAWINGS

FIG. 1 is a conceptual diagram showing a configuration of a system;
FIG. 2 is a block diagram showing the configuration of the system;
FIG. 3 is a diagram for explaining a configuration of a vehicle subjected to an inspection process;
FIG. 4 is a flowchart showing a procedure of the inspection process;
FIG. 5 is a flowchart showing a processing procedure of vehicle running control;
FIG. 6 is a flowchart showing a procedure of an inspection process of a second embodiment;
FIG. 7 is a flowchart showing a processing procedure of braking force inspection associated with a difference in the braking force between left and right front wheels;
FIG. 8 is a diagram for explaining a configuration of a vehicle subjected to an inspection process of a third embodiment;
FIG. 9 is a diagram for explaining a configuration of the vehicle and a drive system, subjected to an inspection process of a fourth embodiment;
FIG. 10 is a block diagram showing a configuration of a vehicle in a fifth embodiment;
FIG. 11 is an explanatory diagram showing a schematic configuration of a system in a sixth embodiment; and
FIG. 12 is a flowchart showing a processing procedure of vehicle running control in the sixth embodiment.

### DETAILED DESCRIPTION

### A. First Embodiment:

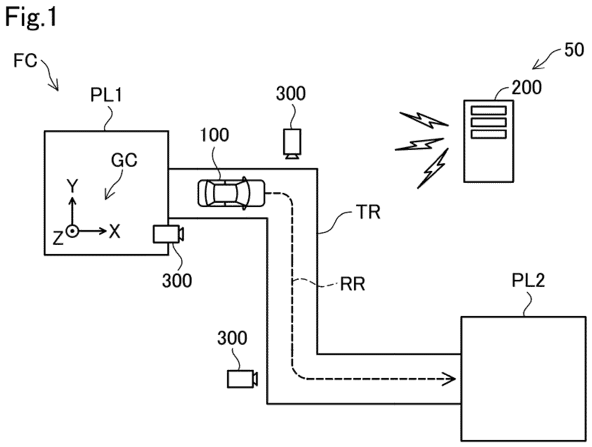

FIG. 1 is a conceptual diagram showing a configuration of a system 50 in a first embodiment. The system 50 has one or more vehicles 100 as moving objects, a server 200, and one or more external sensors 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a truck, a bus, a two-wheel vehicle, a fourwheel vehicle, a combat vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 50 is used in a factory FC that manufactures vehicles 100. In the present embodiment, the reference coordinate system of the factory FC is a global coordinate system GC and a location in the factory can be expressed by X, Y, and Z coordinates in the global coordinate system GC. The factory FC includes a first location PL1 and a second location PL2. The first location PL1 and the second location PL2 are connected by a track TR on which the vehicle 100 can run. In the factory FC, a plurality of external sensors 300 is provided along the track TR. The position of each external sensor 300 in the factory FC is pre-adjusted. The vehicle 100 moves from the first location PL1 to the second location PL2 through the track TR under unmanned driving.

In the present embodiment, an inspection process of a brake system 150 to be described later is performed at the first location PL1. The vehicle 100 that has passed the inspection then moves to the second location PL2 where a next process is performed. On the other hand, the vehicle 100 that has not passed the inspection is moved to a repair site (not shown).

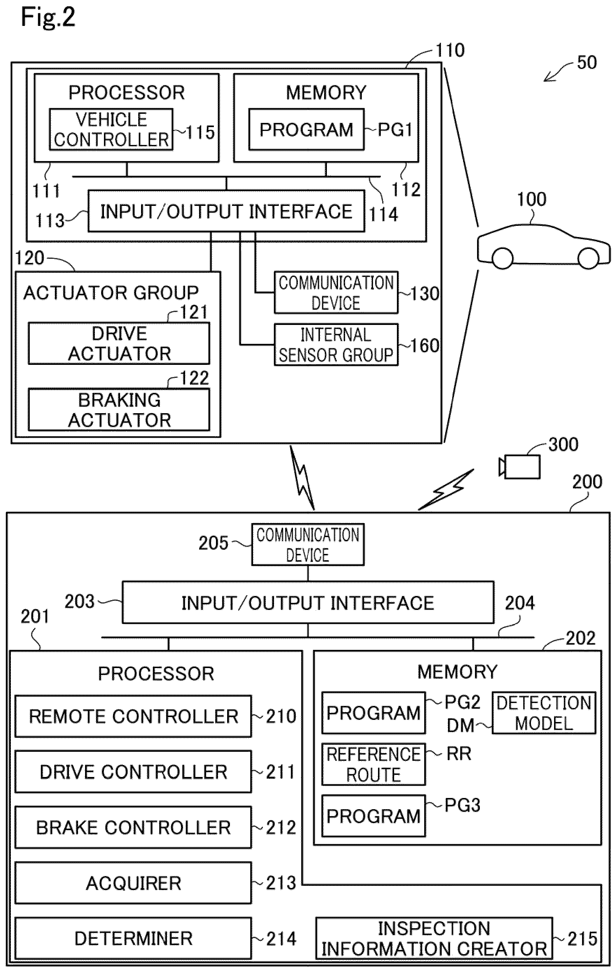

FIG. 2 is a block diagram showing the configuration of the system 50. The vehicle 100 includes a vehicle control device 110 for controlling various parts of the vehicle 100, an actuator group 120 including one or more actuators that drive the parts under the control of the vehicle control device 110, and a communication device 130 for communicating with an external device such as the server 200 via wireless communication. The actuator group 120 includes an actuator of a driving device for accelerating the vehicle 100, an actuator of a steering device for changing a traveling direction of the vehicle 100, and an actuator of a braking device for decelerating the vehicle 100.

The actuator group 120 includes a drive actuator 121 and a braking actuator 122. The drive actuator 121 is a drive actuator for rotating front wheels 81 or rear wheels 82, as described later. The braking actuator 122 is a braking actuator for braking a running vehicle 100 and for holding a stopped vehicle 100 in a stationary state.

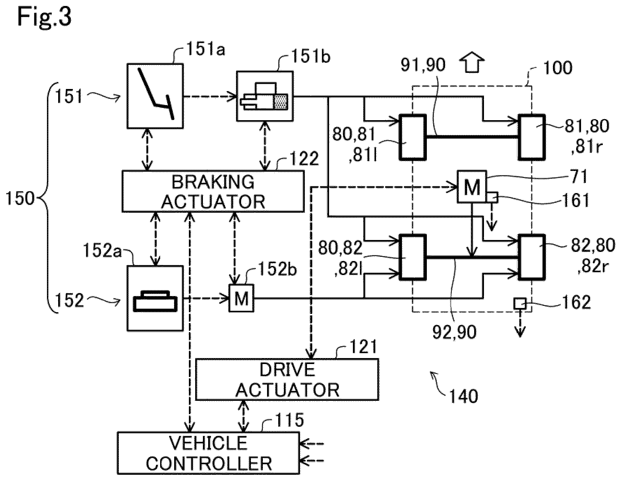

In addition to the above configuration, the vehicle 100 includes an internal sensor group 160. The internal sensor group 160 includes a rotation speed sensor 161, shown in FIG. 3 as described later, and an acceleration sensor 162, shown in FIG. 3 as described later. A vehicle controller 115 receives detection signals directly or indirectly from the sensors included in the internal sensor group 160. Indirectly receiving the detection signal means receiving the signal via the actuator included in the actuator group 120.

The vehicle control device 110 is composed of a computer that includes a processor 111, a memory 112, an input/output interface 113, and an internal bus 114. The processor 111, the memory 112, and the input/output interface 113 are connected via the internal bus 114 to enable bidirectional communication. The actuator group 120 and the communication device 130 are connected to the input/output interface 113. The processor 111 executes a program PG1 stored in the memory 112 to implement various functions, including a function as the vehicle controller 115.

The vehicle controller 115 controls the actuator group 120 to cause the vehicle 100 to run. The vehicle controller 115 controls the actuator group 120 using a running control signal received from the server 200, thereby allowing the vehicle 100 to run. The running control signal is a control signal to cause the vehicle 100 to run. In the present embodiment, the running control signal includes an acceleration and a steering angle of the vehicle 100 as parameters. In other embodiments, the running control signal may include the speed of the vehicle 100 as a parameter instead of or in addition to the acceleration of the vehicle 100.

The server 200 is composed of a computer that includes a processor 201, a memory 202, an input/output interface 203, and an internal bus 204. The processor 201, memory 202, and input/output interface 203 are connected via the internal bus 204 to enable bidirectional communication. A communication device 205 for communicating with various devices outside the server 200 is connected to the input/output interface 203. The communication device 205 can communicate with the vehicle 100 via wireless communication and can communicate with each external sensor 300 via wired or wireless communication. The processor 201 executes a program PG2 stored in the memory 202 to implement various functions, including a function as a remote control unit 210.

The remote control unit 210 acquires detection results from the sensors, creates a running control signal for controlling the actuator group 120 of the vehicle 100 based on the detection results, and transmits the running control signal to the vehicle 100, causing the vehicle 100 to run via remote control. The remote control unit 210 may create and output not only the running control signal, but also control signals for controlling the actuators that operate various auxiliary devices included in the vehicle 100 as well as various equipment such as wipers, power windows, and lamps. In other words, the remote control unit 210 may operate such various equipment and various auxiliary devices via remote control.

The processor 201 includes, in addition to the above configuration, a drive controller 211, a brake controller 212, an acquirer 213, a determiner 214, and an inspection information creator 215. The memory 202 stores a program PG3 in addition to the above configuration. The drive controller 211, the brake controller 212, the acquirer 213, the determiner 214, and the inspection information creator 215 are functional parts implemented by executing the program PG3. The drive controller 211 controls a drive system 140, described later, which applies torque to wheels 80 of the vehicle 100 to rotate the wheels 80 as described later. The brake controller 212 controls the brake system 150, described later, which produces braking force on the vehicle 100. The acquirer 213 acquires rotation information associated with the rotated state of the wheels 80. The rotation information is information about the vehicle 100. The drive controller 211, the brake controller 212, the acquirer 213, and the determiner 214 perform part of the inspection process described later. The server 200 functions as a control device for inspecting the braking force of the vehicle 100.

The external sensor 300 is a sensor located outside the vehicle 100. The external sensor 300 in the present embodiment is a sensor that captures the vehicle 100 from outside the vehicle 100. The external sensor 300 includes a communication device (not shown) and can communicate with other devices such as the server 200 via wired or wireless communication.

Specifically, the external sensor 300 is configured by a camera. The camera as the external sensor 300 captures the vehicle 100 and outputs a captured image as a detection result.

FIG. 3 is a diagram for explaining the configuration of the vehicle 100, subjected to the inspection process described later. As shown in FIG. 3, the vehicle 100 includes the drive system 140 and the brake system 150. The method for manufacturing the vehicle 100 includes an assembly process for assembling the vehicle 100 including the brake system 150 and an inspection process for inspecting the operation of the assembled vehicle 100. This inspection process includes the inspection process described later.

In the present embodiment, the drive system 140 is included in the vehicle 100. The drive system 140 includes the drive actuator 121 described above and an electric motor as a drive source 71 that generates torque. The vehicle 100 in the present embodiment is an electric vehicle driven by the electric motor. The vehicle 100 has the wheels 80 and axles 90. The wheels 80 include the front wheels 81 and the rear wheels 82. The front wheels 81 include a right front wheel 81r and a left front wheel 811. The rear wheels 82 include a right rear wheel 82r and a left rear wheel 82l. The axles 90 include a front axle 91 and a rear axle 92. The vehicle 100 in the present embodiment is a rear-wheel drive vehicle in which the driving force of the drive source 71 is transmitted to the rear axle 92.

The brake system 150 includes a service brake system 151 and a parking brake system 152. The service brake system 151 is used to brake the running vehicle 100. The parking brake system 152 is used to keep the stopped vehicle 100 in a stationary state. In the present embodiment, the brake system 150 is a mechanical brake system. In the present disclosure, a mechanical brake system refers to a brake that mechanically brakes the wheels 80. "Mechanically braking" specifically refers to a type of brake that performs braking by contacting a member integrally equipped with the wheel or with a gear rotating in conjunction with the axle.

In the present embodiment, a friction brake mechanism is applied to the service brake system 151. As the friction brake mechanism, a disk type or a drum type can be used. The service brake system 151 includes the braking actuator 122 described above, a brake pedal 151a, and a hydraulic unit 151b. When the brake pedal 151a is depressed, the displacement of the brake pedal 151a is transmitted to a master cylinder included in the hydraulic unit 151b. In detail, the amount of displacement of the brake pedal 151a is converted into an electrical signal, specifically a voltage, in the braking actuator 122. The braking actuator 122 transmits, to the master cylinder, a hydraulic pressure corresponding to the converted voltage. The hydraulic unit 151b transmits the hydraulic pressure generated by the master cylinder included in the hydraulic unit 151b to the friction brake mechanisms provided at the respective two front wheels 81 and the respective two rear wheels 82. Thus, each of the four wheels 80 is braked by the friction material included in the friction brake mechanism. The greater the amount of displacement of the brake pedal 151a, the greater the hydraulic pressure applied to the hydraulic unit 151b and the greater the braking force applied to the wheels 80 by the friction brake mechanism. The displacement of the brake pedal 151a may be transmitted to the master cylinder as a hydraulic pressure without being converted into voltage. In this case, the braking actuator 122 may transmit the hydraulic pressure to the master cylinder via a path different from the one between the brake pedal 151a and the master cylinder.

In the present embodiment, the parking brake system 152 employs a so-called Electric Parking Brake (EPB), in which the operation of the parking brake mechanism is electrically actuated. In the present embodiment, a disc type parking brake mechanism is provided on each of the two rear wheels 82.

The parking brake system 152 includes the braking actuator 122, a parking brake switch 152a, and a parking brake motor 152b. When the parking brake switch 152a is set to an on state, the parking brake motor 152b is activated, causing a disc (not shown) included in the parking brake mechanism to be pressed against a disc rotor included in the parking brake mechanism, thereby exerting a braking action. In detail, when the parking brake switch 152a is set to the on state, an electrical signal indicating that it is set to the on state is transmitted to the braking actuator 122. The braking actuator 122 activates the parking brake motor 152b when the electrical signal indicating that it is set to the on state is transmitted.

The parking brake mechanism type applied to the parking brake system 152 is not limited to the disc type, but may also be of a drum type or the like. The parking brake mechanism may also be used in combination with the brake mechanism included in the service brake system 151.

As described above, the internal sensor group 160 shown in FIG. 2 includes the rotation speed sensor 161 shown in FIG. 3 and the acceleration sensor 162. The rotation speed sensor 161 detects a rotation speed and a rotation angle of the electric motor as the drive source 71 and transmits signals representing the detected rotation speed and rotation angle to the vehicle controller 115. The acceleration sensor 162 detects an acceleration of the vehicle 100 and transmits a signal representing the detected acceleration to the vehicle controller 115. The acceleration detected by the acceleration sensor 162 includes an acceleration of the vehicle 100 in a front-back direction and an acceleration of the vehicle 100 in a left-right direction.

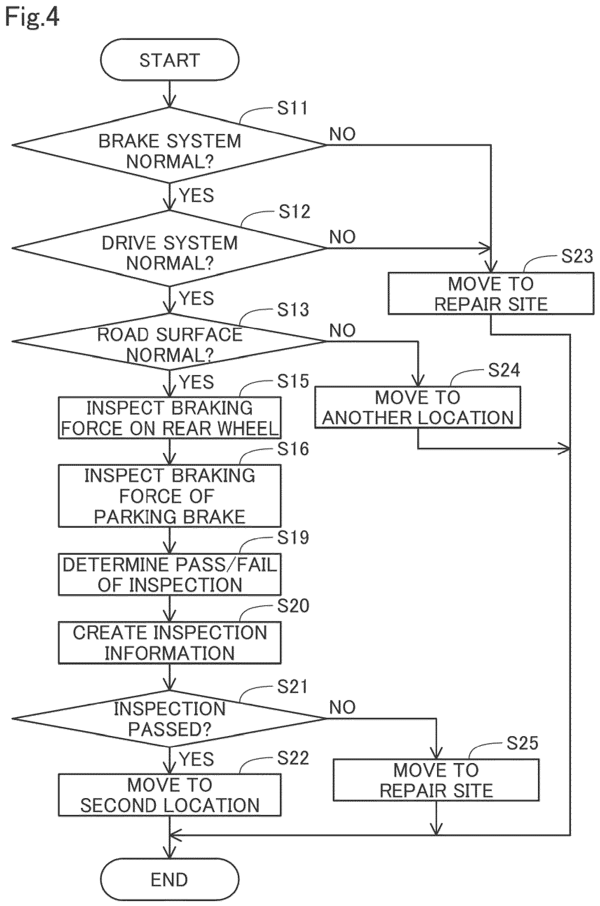

FIG. 4 is a flowchart showing a procedure of the inspection process that implements the inspection method of the present embodiment. In the inspection process, the system 50 functions as an inspection system. The inspection process shown in FIG. 4 is performed on one vehicle 100. In the inspection process of the present embodiment, an inspection of the service brake system 151 and an inspection of the parking brake system 152 are performed on the rear wheels 82. The inspections are performed in accordance with predetermined inspection conditions. The inspection conditions include the condition of a road surface on which the vehicle 100 to be inspected is placed, as well as a set value of the torque and a set value of the braking force for each inspection.

The vehicle 100 to be subjected to the inspection process is in a state where the drive system 140 and the brake system 150 have been completely assembled.

The phrase "drive system 140 has been completely assembled" specifically refers to a state in which mechanical parts forming the drive system 140 have already been assembled, liquids used in the drive system 140, such as lubricating oil and coolant, have already been supplied to the drive system 140, and the driving force of the drive source 71 has already been adjusted. The adjustment of the driving force is, for example, adjustment of a value of the rotation speed in the drive source 71 in relation to the amount of operation of the accelerator pedal (not shown).

The phrase "brake system 150 has been completely assembled" specifically refers to a state in which mechanical parts forming the brake system 150 have already been assembled, liquids used in the brake system 150, such as lubricating oil, coolant, or oil used in the hydraulic unit 151b, have already been supplied to the brake system 150, and the braking force of the brake system 150 has already been adjusted.
The adjustment of the braking force is, for example, the adjustment of a value of the hydraulic pressure in the hydraulic unit 151b in relation to the amount of operation of the brake pedal 151a.

In step S11, it is determined whether the brake system 150 is normal or not. The brake system 150 has a self-diagnostic function. Specifically, the brake system 150 performs self-diagnosis using sensors and the like to determine whether there is any leakage of the liquid used in the brake system 150, whether any connector used in the wiring for transmitting electrical signals is disconnected, or the like. If abnormality is detected in these self-diagnoses, an abnormality signal is input to the vehicle controller 115. When no abnormality signal is input to the vehicle controller 115, the brake system 150 is determined to be normal. On the other hand, when an abnormality signal is input to the vehicle controller 115, the brake system 150 is determined not to be normal, i.e., abnormal.

If the brake system 150 is determined to be normal in step S11, it is determined in step S12 whether the drive system 140 is normal or not. The drive system 140 also has a self-diagnostic function, as in the brake system 150. If abnormality is detected in these self-diagnoses, an abnormality signal is input to the vehicle controller 115. When no abnormality signal is input to the vehicle controller 115, the drive system 140 is determined to be normal. On the other hand, when an abnormality signal is input to the vehicle controller 115, the drive system 140 is determined not to be normal, i.e., abnormal.

If the drive system 140 is determined to be normal in step S12, it is determined in step S13 whether the road surface is normal or not. The braking force fluctuates due to factors such as fluctuations in friction force between a tire and the road surface, depending on the condition of the road surface. Therefore, in step S13, the road surface is determined to be normal when a predetermined road surface condition included in the inspection conditions matches a detected road surface condition. On the other hand, in step S13, the road surface is determined not to be normal, i.e., abnormal when the predetermined road surface condition does not match the detected road surface condition. Typically, the predetermined road surface condition is a condition in which the road surface is not inclined, is flat, and is not wet. It should be noted that, for example, a wet road surface condition may also be set as the predetermined road surface condition for the inspection conditions.

In the present embodiment, step S13 is performed by image processing using a captured image from a camera serving as the external sensor 300 shown in FIG. 2.

In the present embodiment, step S11, step S12, and step S13 are performed by the determiner 214 included in the server 200. In detail, in steps S11 and S12, information is transmitted from the vehicle 100 to the server 200 as to whether or not an abnormality signal is input to the vehicle controller 115. The determiner 214 uses the information on whether the abnormality signal is input or not to determine whether the brake system, the drive system, and the road surface are normal or not. In step S13, the determiner 214 determines whether the road surface is normal or not using an image transmitted from the external sensor 300. In another embodiment, the respective determinations of step S11, step S12, and step S13 may be performed through visual inspection by the inspector.

If the road surface condition is determined to be normal in step S13, a braking force inspection of the rear wheels 82 is performed in step S15. The braking force inspection of the rear wheels 82 is performed by causing the drive actuator 121 to drive the rear wheels 82 with the braking force exerted by the service brake system 151 and then detecting whether the rear wheels 82 rotate or not.

In the present embodiment, step S15 and next step S16 are performed by the server 200 via remote control.

Specifically, in step S15, the drive controller 211 creates and transmits, to the vehicle 100, an inspection control signal for the braking force inspection of the rear wheels 82 to activate the drive actuator 121. Additionally, in step S15, the brake controller 212 creates and transmits, to the vehicle 100, an inspection control signal for the braking force inspection of the rear wheels 82 to activate the service brake system 151. The inspection control signal includes a set value of the hydraulic pressure to be applied to the hydraulic unit 151b and a set value of the torque to be output to the drive source 71. The set value of the hydraulic pressure and the set value of the torque to be output, which are included in the inspection control signal, are the values specified in the inspection conditions.

When the vehicle 100 receives the inspection control signal, it activates the electric motor as the drive source 71 and also activates the service brake system 151. In detail, the vehicle controller 115 causes the drive actuator 121 to control the electric motor to output the specified torque in accordance with the inspection control signal. The vehicle controller 115 also causes the braking actuator 122 to control the hydraulic unit 151b at the specified hydraulic pressure in accordance with the inspection control signal. As a result, a torque is applied to the rear wheels 82, while a braking force is applied to the rear wheels 82. A detection value from the rotation speed sensor 161 and a detection value from the acceleration sensor 162 are transmitted from the vehicle 100 to the server 200 during the period when the torque and the braking force are applied to the rear wheels 82. The detection value from the rotation speed sensor 161 is also referred to as rotation information. The rotation information is information associated with the rotated state of the wheels 80. The detection value from the acceleration sensor 162 is also referred to as acceleration information. The rotation information and the acceleration information are collectively referred to as sensor information. The acquirer 213 of the server 200 receives and acquires the detection value from the rotation speed sensor 161 and the detection value from the acceleration sensor 162, which are transmitted from the vehicle 100. In the present embodiment, both the rotation information and the acceleration information are used to perform the braking force inspection described later. In other embodiments, either the rotation information or the acceleration information may be used to perform the braking force inspection described later.

In step S16, the braking force inspection of the parking brake system 152 is performed. The braking force inspection is performed by causing the drive actuator 121 to drive the rear wheels 82 with the braking force exerted by the parking brake system 152 and then detecting whether the rear wheels 82 rotate or not.

Specifically, in step S16, the drive controller 211 transmits, to the vehicle 100, the inspection control signal for the braking force inspection of the parking brake to activate the drive actuator 121 of the vehicle 100. Additionally, in step S16, the brake controller 212 transmits, to the vehicle 100, the inspection control signal for the braking force inspection of the parking brake to activate the parking brake system 152. The inspection control signal includes a set value of the torque to be output to the parking brake motor 152b and a set value of the torque to be output to the drive source 71. Each set value included in the inspection control signal is a value specified in the inspection conditions.

The vehicle 100 activates the electric motor as the drive source 71 and the parking brake system 152 when receiving the inspection control signal. In detail, the vehicle controller 115 causes the drive actuator 121 to control the electric motor to output the torque specified by the inspection control signal. The vehicle controller 115 also causes the braking actuator 122 to control the parking brake motor 152b to output the torque specified by the inspection control signal. As a result, a torque is applied to the rear wheels 82, while a braking force is applied to the rear wheels 82. A detection value from the rotation speed sensor 161 and a detection value from the acceleration sensor 162 are transmitted from the vehicle 100 to the server 200 during the period when the torque and the braking force are applied to the rear wheels 82. The acquirer 213 of the server 200 receives and acquires the detection value from the rotation speed sensor 161 and the detection value from the acceleration sensor 162 which are transmitted from the vehicle 100.

In step S19 as a determination process, the determiner 214 determines whether the inspection is passed or not using the acquired sensor information. Specifically, in step S19, it is determined whether the braking force inspection of the rear wheels 82 and the braking force inspection of the parking brake are passed or failed.

As for the braking force inspection of the rear wheels 82, the determiner 214 determines that the inspection is passed if both the detection value from the rotation speed sensor 161 and the detection value from the acceleration sensor 162 indicate that the rear wheels 82 are not rotating. The vehicle 100 moves when the rear wheels 82 rotate. This makes it possible to determine whether the rear wheels 82 rotate or not using the detection value from the acceleration sensor 162. On the other hand, the determiner 214 determines that the inspection is not passed, i.e., failed if at least one of the detection value from the rotation speed sensor 161 and the detection value from the acceleration sensor 162 indicates that the rear wheels 82 are rotating. That is, the determiner 214 determines that a predetermined inspection criterion for the braking force inspection of the rear wheels 82 is satisfied when the rear wheels 82 do not rotate while the torque specified in the inspection conditions and the braking force specified in the inspection conditions are applied to the rear wheels 82.

The determiner 214 also makes a determination on the braking force inspection of the parking brake in the same manner as the braking force inspection of the rear wheels 82. That is, the determiner 214 determines that the inspection is passed when both the detection value from the rotation speed sensor 161 and the detection value from the acceleration sensor 162 indicate that the rear wheels 82 are not rotating. On the other hand, the determiner 214 determines that the inspection is not passed, i.e., failed when at least one of the detection value from the rotation speed sensor 161 and the detection value from the acceleration sensor 162 indicates that the rear wheels 82 are rotating. The determiner 214 stores the determination result in the memory 202.

In the present embodiment, in step S19, the determiner 214 makes a determination using both the detection value from the rotation speed sensor 161 and the detection value from the acceleration sensor 162. In another embodiment, the determiner 214 may make a determination using either the detection value from the rotation speed sensor 161 or the detection value from the acceleration sensor 162.

In step S20, the inspection information creator 215 creates inspection information using the determination result made by the determiner 214. The inspection information includes whether the braking force inspection of the rear wheels 82 is passed or failed and whether the braking force inspection of the parking brake is passed or failed. The inspection information creator 215 stores the created inspection information in the memory 202.

In step S21, the determiner 214 determines whether the braking force inspection is passed or not. The determiner 214 determines in step S21 that the inspection is passed if both the braking force inspection of the rear wheels 82 and the braking force inspection of the parking brake are determined to be passed. On the other hand, the determiner 214 determines that the braking force inspection is not passed, i.e., failed if at least one of the braking force inspection of the rear wheels 82 and the braking force inspection of the parking brake is determined to be failed.

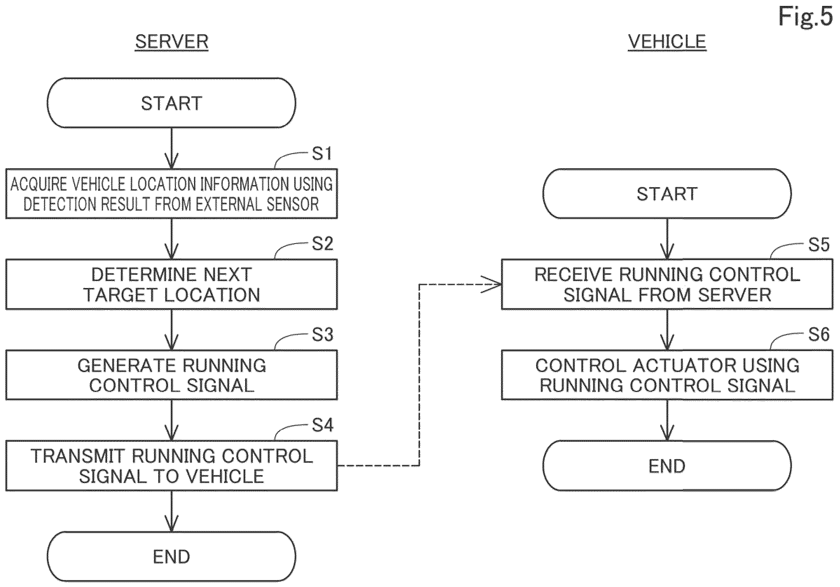

When the determiner 214 determines in step S21 that the inspection is passed, in step S22, the vehicle 100 moves to the second location PL2 under unmanned driving, and this inspection process is completed. Step S22 is described with reference to FIG. 5.

FIG. 5 is a flowchart showing a processing procedure of running control for the vehicle 100. In the processing procedure of FIG. 5, the processor 201 of the server 200 functions as the remote control unit 210 by executing the program PG2. The processor 111 of the vehicle 100 functions as the vehicle controller 115 by executing the program PG1.

In step S1, the processor 201 of the server 200 acquires vehicle location information using the detection result output from the external sensor 300. The vehicle location information is locational information as a basis for generating a running control signal. In the present embodiment, the vehicle location information includes the location and orientation of the vehicle 100 in the global coordinate system GC of the factory FC. Specifically, in step S1, the processor 201 acquires the vehicle location information using the captured image acquired from the camera as the external sensor 300.

More specifically, in step S1, the processor 201 for example, determines the outer shape of the vehicle 100 from the captured image, calculates the coordinates of a positioning point of the vehicle 100 in a coordinate system of the captured image, namely, in a local coordinate system, and converts the calculated coordinates to coordinates in the global coordinate system GC, thereby acquiring the location of the vehicle 100. The outer shape of the vehicle 100 in the captured image may be detected by inputting the captured image to a detection model DM using artificial intelligence, for example. The detection model DM is prepared in the system 50 or outside the system 50. The detection model DM is stored in advance in the memory 202 of the server 200, for example. An example of the detection model DM is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 100, and a label showing whether each region in the training image is a region indicating the vehicle 100 or a region indicating a subject other than the vehicle 100, for example. In training the CNN, a parameter for the CNN is preferably updated through backpropagation in such a manner as to reduce error between output result obtained by the detection model and the label. The processor 201 can acquire the orientation of the vehicle 100 through estimation based on the direction of a motion vector of the vehicle 100 detected from change in location of a feature point of the vehicle 100 between frames of the captured images using optical flow process, for example.

In step S2, the processor 201 of the server 200 determines a target location to which the vehicle 100 is to move next. In the present embodiment, the target location is expressed by X, Y, and Z coordinates in the global coordinate system GC. The memory 202 of the server 200 contains a reference route RR stored in advance as a route along which the vehicle 100 is to run. The route is expressed by a node indicating a departure place, a node indicating a way point, a node indicating a destination, and a link connecting nodes to each other. The processor 201 determines the target location to which the vehicle 100 is to move next using the vehicle location information and the reference route RR. The processor 201 determines the target location on the reference route RR ahead of a current location of the vehicle 100.

In step S3, the processor 201 of the server 200 generates a running control signal for causing the vehicle 100 to run toward the determined target location. The processor 201 calculates a running speed of the vehicle 100 from transition of the location of the vehicle 100 and makes comparison between the calculated running speed and a target speed of the vehicle 100 determined in advance. If the running speed is lower than the target speed, the processor 201 generally determines an acceleration in such a manner as to accelerate the vehicle 100. If the running speed is higher than the target speed as, the processor 201 generally determines an acceleration in such a manner as to decelerate the vehicle 100. If the vehicle 100 is on the reference route RR, the processor 201 determines a steering angle and an acceleration in such a manner as to prevent the vehicle 100 from deviating from the reference route RR. If the vehicle 100 is not on the reference route RR, in other words, if the vehicle 100 deviates from the reference route RR, the processor 201 determines a steering angle and an acceleration in such a manner as to return the vehicle 100 to the reference route RR.

In step S4, the processor 201 of the server 200 transmits the generated running control signal to the vehicle 100. The processor 201 repeats the acquisition of vehicle location information, the determination of a target location, the generation of a running control signal, the transmission of the running control signal, and others in a predetermined cycle.

In step S5, the processor 111 of the vehicle 100 receives the running control signal transmitted from the server 200. In step S6, the processor 111 of the vehicle 100 controls the actuator group 120 of the vehicle 100 using the received running control signal, thereby causing the vehicle 100 to run at the acceleration and the steering angle indicated by the running control signal. The processor 111 repeats the reception of a running control signal and the control over the actuator group 120 in a predetermined cycle. According to the system 50 in the present embodiment, it becomes possible to move the vehicle 100 without using a transport unit such as a crane or a conveyor.

The processing proceeds to step S23 if the brake system 150 is determined not to be normal in step S11 of FIG. 4. The processing proceeds to step S23 if the drive system 140 is determined not to be normal in step S12.

In step S23, the vehicle 100 is moved by an operator to a repair site (not shown). The case in which step S23 is performed is when there is any abnormality in either the brake system 150 or the drive system 140. Thus, by having the operator move it, the vehicle 100 is reliably moved to the repair site. As modes of movement, the vehicle 100 may be moved by being driven by an operator, placed on and moved with a transport moving object, or towed by a tow vehicle. After step S23 is performed, this inspection process is completed. In the vehicle 100 moved to the repair site, at least one of the brake system 150 and the drive system 140 is repaired. The inspection process is then performed again on the repaired vehicle 100.

If the road surface condition is determined not to be normal in step S13, the vehicle 100 is moved to another location by the operator in step S24. Another location is, for example, another inspection location or a waiting area. After step S24 is performed, this inspection process is completed.

If the inspection is determined not to be passed in step S21, the vehicle 100 is moved to a repair site (not shown) in step S25. After step S25 is performed, this inspection process is completed. The brake system 150 in the vehicle 100, which is moved to the repair site, is repaired. The inspection process is then performed again on the repaired vehicle 100. The repair site to which the vehicle is moved in step S23 and the repair site to which the vehicle is moved in step S25 may be the same location or different locations from each other. The movement in step S25 may be performed by an operator or under unmanned driving. The method of movement may be decided based on the inspection result obtained in step S21. For example, when the braking force inspection of the rear wheels 82 is passed, it is preferable to perform the movement under unmanned driving, since the desired self-running is highly likely to be achieved.

According to the first embodiment described above, the server 200 includes the drive controller 211, the brake controller 212, the acquirer 213, and the determiner 214. In the process of the braking force inspection, the drive controller 211 controls the drive system 140 by using the inspection control signal. In the process of the braking force inspection, the brake controller 212 controls the brake system 150 by using the inspection control signal. The acquirer 213 acquires the detection value from the rotation speed sensor 161 as the rotation information and the detection value from the acceleration sensor 162 as the acceleration information. The determiner 214 determines whether the braking force of the vehicle 100 satisfies the inspection criteria using the sensor information. In the braking force inspection of the rear wheels 82, a braking force is applied to the wheels 80 via the braking actuator 122 through the control by the brake controller 212. Instead of applying the braking force to the wheels 80 by depressing the brake pedal 151a manually, the braking actuator 122 applies the braking force. This makes it possible to reduce variations in the hydraulic pressure in the hydraulic unit 151b during inspection, thus improving the accuracy of the braking force inspection. In addition, operation errors related to human operation can be prevented because the brake pedal 151a is not manually operated during the inspection.

The drive system 140 includes the electric motor, which is the drive source 71 included in the vehicle 100. This allows torque to be applied to the wheels 80 by activating the electric motor during the inspection. Therefore, the braking force can be inspected without using a device that is separate from the vehicle 100 and applies torque to the wheels 80.

The drive controller 211 remotely controls the drive system 140. The brake controller 212 remotely controls the brake system 150. Therefore, the number of persons working for the inspection process can be reduced.

The inspection information creator creates the inspection information. Thus, the created inspection information can be used, for example, for inspection history and improvement in the manufacturing process.

The determiner 214 determines that the inspection criterion is satisfied when step S19 indicates that the rear wheels 82 are not rotating. Thus, it is possible to determine that the brake system 150 has a predetermined braking force by determining that the rear wheels 82, to which a predetermined torque is applied, are not rotating.

### B. Second Embodiment:

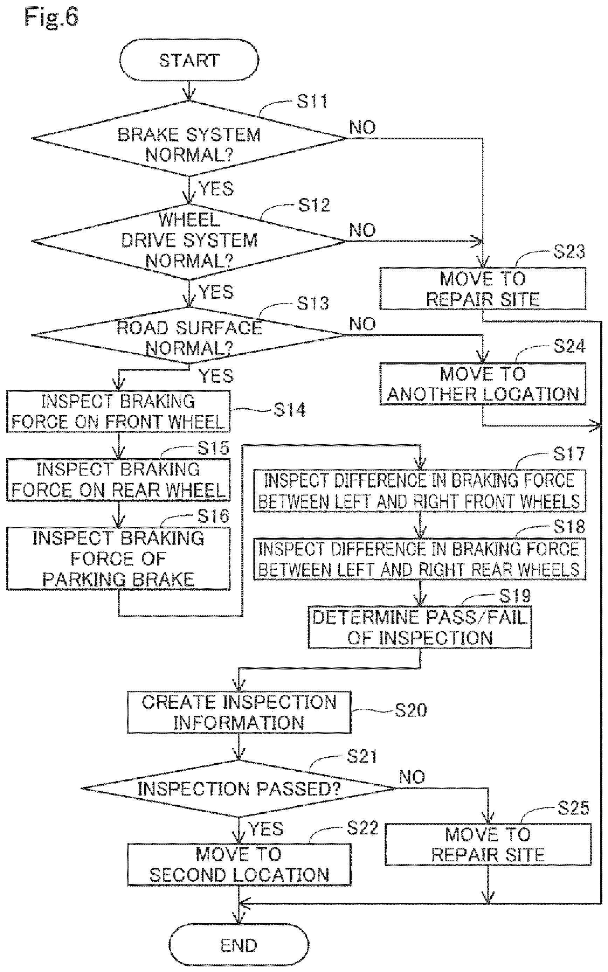

FIG. 6 is a flowchart showing a procedure of an inspection process of the present embodiment. The present embodiment differs from the first embodiment in that, in addition to the above braking force inspection, inspections are performed on the braking force of the front wheels 81, on a difference in the braking force between the left and right front wheels 81, and on a difference in the braking force between the left and right rear wheels 82. The same processing steps as in the first embodiment above are denoted by the same symbols, and a detailed description thereof is omitted as appropriate. In the present embodiment, a description will be given on a case where the vehicle 100 to be inspected is a 4-wheel drive electric vehicle.

In the inspection process of the preset embodiment, steps S11 to S13 in FIG. 6 are performed in the same manner as in the first embodiment. If the road surface condition is determined to be normal in step S13, the braking force inspection of the front wheels 81 is performed in step S14.

In the present embodiment, each braking force inspection is performed by the server 200 via remote control, as in the first embodiment.

Specifically, in step S14, the drive controller 211 creates and transmits, to the vehicle 100, the inspection control signal for the braking force inspection of the front wheels 81 to activate the drive actuator 121, as in step S15 of the first embodiment. Additionally, in step S14, the brake controller 212 creates and transmits, to the vehicle 100, the inspection control signal for the braking force inspection of the front wheels 81 to activate the service brake system 151. Furthermore, the vehicle 100 transmits the sensor information to the server 200, as in step S15 of the first embodiment.

The set value of the torque to be output to the drive source 71 in step S14 and the set value of the torque to be output to the drive source 71 in the next step S15 may be the same or different from each other. The set value of the hydraulic pressure to be applied to the hydraulic unit 151b in step S14 and the set value of the hydraulic pressure to be applied to the hydraulic unit 151b in the next step S15 may be the same or may be different from each other. When the set value of the torque to be output and the set value of the hydraulic pressure are both the same, either step S14 or step S15 may be omitted.

After step S15 and step S16 have been performed, the inspection of the difference in the braking force between the left and right front wheels 81 is performed in step S17. This inspection is performed to inspect the difference between the braking force of the left front wheel 81l as the left wheel and the right front wheel 81r as the right wheel.

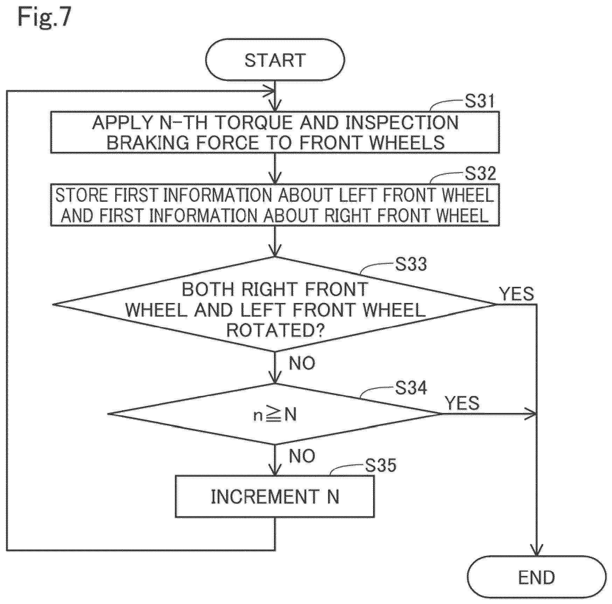

FIG. 7 is a flowchart showing a processing procedure of braking force inspection associated with the difference in the braking force between the left and right front wheels 81. The braking force inspection associated with the difference in the braking force between the left and right front wheels 81 is performed in the same manner as the braking force inspection of the front wheels 81 in that the drive actuator 121 is caused to drive the front wheels 81 while the braking force is exerted by the service brake system 151. This braking force inspection associated with the difference between the left and right wheels further involves detecting the minimum value of the torque at which the right front wheel 81r. is determined to be rotating, and detecting the minimum value of the torque at which the left front wheel 81l is determined to be rotating, by changing the applied torque to drive the front wheels 81. That is, the maximum value of the torque at which the left front wheel 81l is determined not to rotate is treated as the braking force for the left front wheel 81l. The same goes for the right front wheel 81r. The difference in the braking force between the left front wheel 81l and the right front wheel 81r is then compared to a threshold value.

Steps S31 to S33 shown in FIG. 7 are also referred to as an inspection processing routine. In the inspection processing routine, the processor 201 uses a variable n and a constant N. In the memory 202, the first to n-th torques are stored as the inspection conditions for performing the braking force inspection associated with the difference between the left and right wheels. As described above, it is necessary to rotate the wheels 80 in the braking force inspection associated with the difference between the left and right wheels. Thus, the set value of the hydraulic pressure of this inspection is preferably smaller than the set value of a braking force inspection other than that associated with the difference between the left and right wheels, for example, the braking force inspection of the front wheels 81.

In step S31 of FIG. 7, the n-th torque and the inspection braking force are applied to the front wheels 81. In the first step S31 after the inspection process routine is started, the first torque is applied. The larger the torque number, the higher the torque value is set. The inspection braking force is the value of the braking force for the braking force inspection associated with the difference between the left and right wheels, i.e., the value of the hydraulic pressure therefor.

Specifically, in step S31, the drive controller 211 creates and transmits, to the vehicle 100, an inspection control signal for the braking force inspection associated with the difference in the braking force between the left and right front wheels 81 to activate the drive actuator 121. Additionally, in step S31, the brake controller 212 creates and transmits, to the vehicle 100, an inspection control signal for the braking force inspection associated with the difference between the left and right front wheels 81 to activate the service brake system 151. The transmitted inspection control signal includes the set value of the hydraulic pressure to be applied to the hydraulic unit 151b and the set value of the n-th torque to be output to the drive source 71. As in step S15, the vehicle 100 transmits the sensor information.

In step S32, the acquirer 213 acquires the sensor information in a state where the n-th torque and the inspection braking force are applied to the left front wheel 811 and the right front wheel 81r and then stores the acquired sensor information in the memory 202.

In step S33, the determiner 214 determines whether both the right front wheel 81r and the left front wheel 81l rotate. In detail, the determiner 214 determines whether the right front wheel 81r is rotating and whether the left front wheel 811 is rotating. If both the right front wheel 81r and the left front wheel 81l are determined not to be rotating, in step S34, the determiner 214 determines whether the variable n is equal to or greater than the constant N.

If the variable n is determined not to be equal to or greater than the constant N in step S34, the determiner 214 increments the variable n in step S35, and the processing step returns to step S31. Thus, the torque is changed to increase until both the right front wheel 81r and the left front wheel 81l are determined to rotate in step S33, or until the number of torque set reaches the N-th number, whereby the inspection processing routine is repeatedly executed.

This processing routine is completed when both the right front wheel 81r and the left front wheel 81l are determined to have rotated in step S33 or when the number n is determined to be equal to or greater than the constant N in step S34.

Step S18 in FIG. 6 is performed in the same manner as step S17, except that the inspection targets are not the front wheels 81, but the right rear wheel 82r and the left rear wheel 82l, and thus a description thereof is omitted.

In step S19, the determiner 214 determines whether each inspection is passed or not using the acquired sensor information. The method of determining whether the braking force inspection of the rear wheels 82 is passed or failed and the method of determining whether the braking force inspection of the parking brake is passed or failed are the same as those in the first embodiment, and thus a description thereof is omitted. The method of determining whether the braking force inspection of the front wheels 81 is passed or failed is performed in the same manner as the method of determining whether the braking force inspection of the rear wheels 82 is passed or failed. That is, as for the braking force inspection of the front wheels 81, the determiner 214 determines that the inspection is passed when both the detection value from the rotation speed sensor 161 and the detection value from the acceleration sensor 162 indicate that the rear wheels 82 are not rotating. On the other hand, the determiner 214 determines that the inspection is not passed, i.e., failed if at least one of the detection value from the rotation speed sensor 161 and the detection value from the acceleration sensor 162 indicates that the rear wheels 82 are rotating.

As for whether the braking force inspection associated with the difference of the braking force between the left and right front wheels 81, the determiner 214 determines that the inspection is passed when the difference between the minimum value of the torque at which the left front wheel 81l is determined to have rotated and the minimum value of the torque at which the right front wheel 81r is determined to have rotated is equal to or less than the predetermined threshold value. On the other hand, the determiner 214 determines that the inspection is not passed, i.e., failed when the above difference is greater than the threshold value. That is, when the above difference is equal to or less than the threshold value, the determiner 214 determines that the braking force inspection associated with the difference between the left and right front wheels 81 satisfies the predetermined inspection criterion.

As for whether the braking force inspection associated with the difference between the left and right rear wheels 82 is passed or failed, the determiner 214 makes a determination in the same manner as the method of determining whether the braking force inspection associated with the difference between the left and right front wheels 81 is passed or failed. That is, the determiner 214 determines that the inspection is passed when the difference between the minimum value of the torque at which the left rear wheel 82l is determined to have rotated and the minimum value of the torque at which the right rear wheel 82r is determined to have rotated is equal to or less than the predetermined threshold value.

In step S20, the inspection information created by the inspection information creator 215 is configured such that the inspection condition for each inspection item is associated with the pass/fail result, which is the fourth information associated with the determination made by the determiner 214. The inspection conditions include second information associated with the torque and third information associated with the braking force, for each inspection. The second information associated with the torque is, for example, the value of the torque to be output to the electric motor. The third information associated with the braking force is, for example, the value of the hydraulic pressure to be applied to the hydraulic unit 151b and the value of the torque to be output to the parking brake motor 152b. The pass/fail result is the result of the determination made by the determiner 214 and is information indicative of either pass or fail. In step S19, the inspection information creator stores the created inspection information in the memory 202.

In step S21, the determiner 214 determines whether the inspection is passed or not. When the determiner 214 determines that all of the respective inspections from step S14 to step S18 have been passed, then in step S21, the determiner 214 determines that the inspection is passed. In contrast, when the determiner 214 determines that at least one of the inspections from step S14 to step S18 is not passed, the determiner 214 determines in step S21 that the inspection is not passed.

Steps S22, S23, S24, and S25 are performed in the same manner as those in the first embodiment, and a description thereof is omitted.

In the present embodiment, a 4-wheel drive electric vehicle is exemplified and described as the vehicle 100 to be inspected. In addition, the inspection method of the present embodiment can be applied to other vehicles 100, such as 2-wheel drive vehicles and part-time 4-wheel drive vehicles, for example. When performing the braking force inspection of the rear wheels 82 on a front-wheel drive vehicle, torque is applied to the front wheels 81 by the drive actuator 121. By applying the torque to the front wheels 81, the rear wheels 82 rotate in the same manner as when running, and thus the braking force inspection of the rear wheels 82 can be performed.

According to the second embodiment described above, in step S31, the drive controller 211 controls the drive system 140 to apply the n-th torque to the front wheels 81. In step S31, the brake controller 212 controls the brake system 150 to apply an inspection braking force to the front wheels 81. In step S19, the determiner 214 determines that the inspection criterion is satisfied when the difference between the minimum value of the torque at which the right front wheel 81r is determined to be rotating and the minimum value of the torque at which the left front wheel 81l is determined to be rotating is equal to or less than the predetermined threshold value. This enables the braking force inspection associated with the difference of the braking force between the left and right front wheels 81.

In step S20, the inspection information creator 215 creates inspection information that associates the second information about the torque, the third information about the braking force, and the fourth information about the determination made by the determiner 214 with one another. This allows the inspection information including more detailed information to be used as the inspection history or the like.

### C. Third Embodiment:

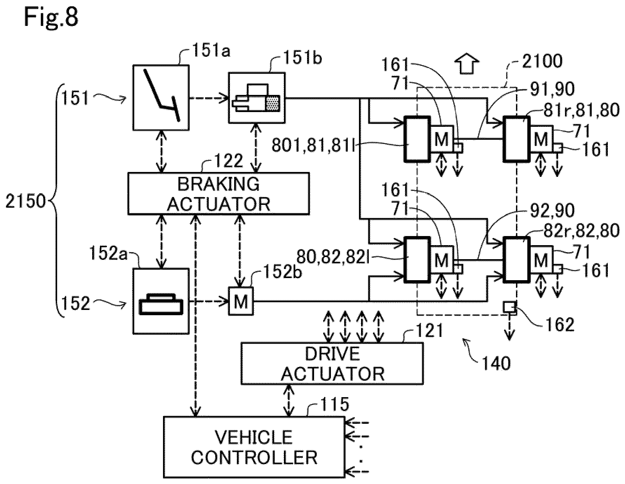

FIG. 8 is a diagram for explaining the configuration of a vehicle 2100 associated with an inspection process of a present embodiment. The vehicle 2100 of the present embodiment differs from the vehicle 100 of the first embodiment in that the electric motor, which is the drive source 71, is provided independently in each of the four wheels 80. The drive controller 211 of the server 200 then controls each of the four wheels 80 independently by controlling the drive actuator 121. The same configurations as in the above respective embodiments are denoted by the same signs, and a detailed description thereof is omitted as appropriate.

As described above, the vehicle 2100 is a 4-wheel drive vehicle, with each of the left front wheel 81l, the right front wheel 81r, the left rear wheel 82l, and the right rear wheel 82r of the vehicle 2100 being equipped with an electric motor that is the drive source 71. This allows torque to be applied to each of the four wheels independently by operating the four drive sources 71 independently. As in the first embodiment, the rotation speed sensor 161 is attached to each electric motor.

Since the procedure of the inspection process of the present embodiment is the same as that shown in the flowchart of FIG. 6, only differences therebetween will be described with reference to FIG. 6. The same processing steps as in the above respective embodiments are denoted by the same symbols, and a detailed description thereof is omitted as appropriate.

The present embodiment enables the four wheels 80 to be controlled independently. Accordingly, in step S14, the vehicle 2100 is instructed to control the drive sources 71 corresponding to the front wheels 81. In step S15, the vehicle 2100 is instructed to control the drive sources 71 corresponding to the rear wheels 82.

In step S17, the braking force inspection is performed on each of the right front wheel 81r and the left front wheel 811. That is, when the braking force inspection is performed on the right front wheel 81r, the torque and braking force are applied only to the right front wheel 81r, and it is determined whether or not the right front wheel 81r has rotated.

In the present embodiment, the electric vehicle including the electric motor on each of the four wheels 80 is exemplified and described as the vehicle 2100 to be inspected. In addition to this, the inspection method of the present embodiment can be applied to an electric vehicle in which the number of electric motors as the drive source is less than the number of wheels, while each of the four wheels 80 is controlled independently.

According to the third embodiment described above, the drive controller 211 controls each of the four wheels 80 independently. This enables independent inspection of the braking forces for the four wheels 80.

### D. Fourth Embodiment:

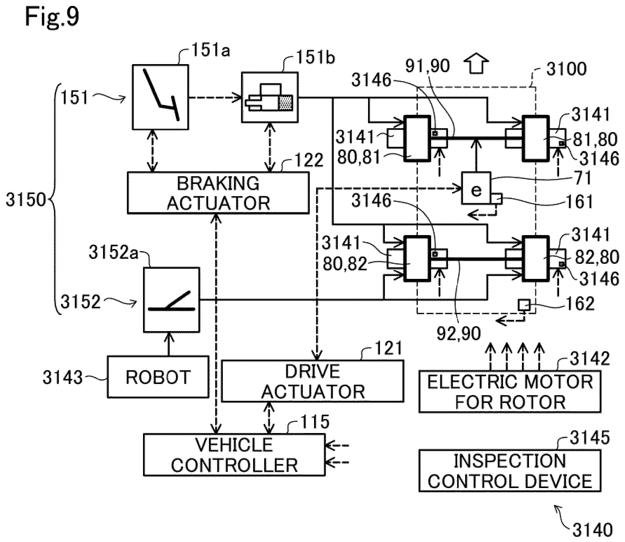

FIG. 9 is a diagram for explaining a configuration of a vehicle 3100 and a configuration of a drive system 3140, which are subjected to an inspection process of a present embodiment. The vehicle 3100 of the present embodiment differs from the vehicle 100 of the first embodiment in that it is an engine vehicle having an engine as the drive source 71 and that a parking brake system 3152 is of a manual type. The drive system 3140 of the present embodiment differs from the drive system 140 of the first embodiment in that it is separate from the vehicle 3100. The same configurations as in the above respective embodiments are denoted by the same symbols, and a detailed description thereof is omitted as appropriate.

The vehicle 3100 of the present embodiment is a front-wheel drive vehicle in which the driving force of the engine, which is the drive source 71, is transmitted to the front wheels 81. In the parking brake system 3152, when a brake lever 3152a is manually operated, its operation is mechanically transmitted to the parking brake mechanism. Note that the brake lever 3152a may be a lever that is operated by a human hand or human foot.

The drive system 3140 is provided in the first location PL1. The drive system 3140 includes four inspection rotors 3141, an electric motor 3142 for the rotor, a robot 3143, and an inspection control device 3145. The four inspection rotors 3141 are provided at the four wheels 80, with one rotor at each wheel. Each inspection rotor 3141 makes the wheel 80 rotatable in contact with the corresponding wheel 80. In detail, the inspection rotors 3141 include multiple rotors configured to contact the tires at multiple locations, thereby enabling stable rotation of the wheels 80. The four inspection rotors 3141 are rotated by a driving force transmitted from the electric motor 3142 for the rotor. The four inspection rotors 3141 are able to rotate independently. Each of the four inspection rotors 3141 includes a rotation angle sensor 3146. The robot 3143 operates the brake lever 3152a. The inspection control device 3145 is communicable with the server 200.

The procedure of the inspection process in the present embodiment is similar to that of the inspection process in the second embodiment. For this reason, FIG. 6 is used to explain the differences in the inspection process between the present embodiment and the second embodiment. In the inspection process, the vehicle 3100 is set in a state in which the driving force is not transmitted from the drive source 71 to the front axle 91, which is the drive axle.

In the braking force inspection of the front wheels 81 in step S14, the drive controller 211 creates and transmits, to the drive system 3140, the inspection control signal for the braking force inspection of the front wheels 81 to activate the electric motor 3142 for the rotor corresponding to the front wheel 81. In addition, in step S14, the brake controller 212 creates and transmits, to the vehicle 3100, the inspection control signal for the braking force inspection of the front wheels 81 to activate the service brake system 151. The inspection control signal includes the set value of the hydraulic pressure to be applied to the hydraulic unit 151b and the set value of the torque to be output to the electric motor 3142 for the rotor. The set value of the hydraulic pressure and the set value of the torque to be output, which are included in the inspection control signal, are the values specified in the inspection conditions.

The inspection control device 3145 of the drive system 3140 activates the electric motor 3142 for the rotor corresponding to the front wheel 81 when receiving the inspection control signal. The vehicle 3100 activates the service brake system 151 when receiving the inspection control signal. This allows the torque to be applied to the front wheels 81 of the vehicle 3100 by the rotation of the inspection rotors 3141 and also allows the braking force to be applied thereto by the service brake system 151. The inspection control device 3145 transmits the detection value from the rotation angle sensor 3146 as the rotation information to the server 200.

In the braking force inspection of the rear wheels 82 in step S15, the server 200 creates and transmits, to the drive system 3140, the inspection control signal for the braking force inspection of the rear wheels 82 to rotate the inspection rotors 3141 corresponding to the rear wheels 82. Step S15 is the same as step S14 except that the drive system 3140 is caused to control the rotation of the rear wheels 82 instead of the front wheels 81, and thus a description thereof is omitted.

In step S16, the drive controller 211 creates and transmits, to the drive system 3140, the inspection control signal for the braking force inspection of the parking brake to activate the electric motor 3142 for the rotor corresponding to the rear wheel 82. Additionally, in step S16, the brake controller 212 transmits, to the drive system 3140, the inspection control signal for the braking force inspection of the parking brake to activate the parking brake system 152. The inspection control signal includes the set value of the torque to be output to the electric motor 3142 for the rotor and the set value of the amount of displacement of the brake lever 3152a to be applied to the robot 3143. Each set value included in the inspection control signal is a value defined in the inspection conditions. Thus, the torque is applied to the rear wheels 82 of the vehicle 3100 by rotation of the inspection rotor 3141, and the brake lever 3152a is operated, thereby applying the braking force to the rear wheels 82.
The inspection control device 3145 transmits the detection value from the rotation speed sensor 161 as the rotation information to the server 200.

When the braking force of the left front wheel 81l is detected in step S17, the drive controller 211 transmits the inspection control signal for rotating the inspection rotor 3141 corresponding to the left front wheel 81l, to the drive system 3140 instead of the vehicle 3100. When the braking force of the right front wheel 81r is detected in step S17, the drive controller 211 transmits the inspection control signal for rotating the inspection rotor 3141 corresponding to the right front wheel 81r, to the drive system 3140.

Step S18 is performed in the same manner as step S17 for the rear wheels 82 instead of the front wheels 81.

According to the fourth embodiment described above, the service brake system 151 is operated by the braking actuator 122, as in the above embodiments. This reduces variations in the hydraulic pressure of the hydraulic unit 151b in the braking force inspection, thereby making it possible to improve the accuracy of the inspection. The drive system 3140 also applies torque to the wheels 80 from outside the vehicle 3100. Therefore, when the vehicle 3100 is a gasoline-powered vehicle, the braking force can be inspected without operating the engine.

### E. Other Embodiments of Inspection Process:

In step S14, step S15, and step S16 of the fourth embodiment, it is determined whether the wheels 80 to be inspected have rotated or not when the torque and the braking force in the inspection conditions are applied to the wheels 80 to be inspected. As another embodiment, a more detailed inspection may be performed.

For example, in step S14, the maximum value of the torque at which the left front wheel 81l is determined not to rotate and the maximum value of the torque at which the right front wheel 81r is determined not to rotate may also be inspected, as in step S17. Further, in step S14, the front axle weight, which is the weight of the front axle 91, may be detected. Specifically, a weight sensor that detects the weight of the vehicle 2100 is provided at the first location PL1 where the inspection process is performed. The detection value indicating the weight detected by the weight sensor is transmitted to the server 200 by a communication device provided at the first location PL1. The acquirer 213 acquires the detection value indicating the weight detected by the weight sensor. The determiner 214 determines whether a calculated value, which is obtained by dividing the sum of the maximum value of the torque at which the left front wheel 81l is determined not to rotate and the maximum value of the torque at which the right front wheel 81r is determined not to rotate by the front axle weight, is equal to or greater than the inspection criterion. If the calculated value is equal to or greater than the inspection criterion, the determiner 214 determines that the inspection is passed.

Examples of the magnitude of the torque that is usable may include the magnitude of the torque included in the inspection control signal transmitted by the drive controller 211, the magnitude of a drive current flowing through the inspection rotor 3141, and the magnitude of a torque of the inspection rotor 3141 converted from the magnitude of the drive current. The relationship between the magnitude of the drive current flowing to the inspection rotor 3141 and the magnitude of the torque of the inspection rotor 3141 can be determined in advance through experimentation.

Similarly, step S15 may involve inspecting the maximum value of the torque at which the left rear wheel 82l is determined not to rotate and the maximum value of the torque at which the right rear wheel 82r is determined not to rotate, and detecting a rear axle weight, which is the weight of the rear axle 92. Then, the determiner 214 may determine whether the calculated value obtained by dividing the sum of the maximum value of the torque at which the left rear wheel 82l is determined not to rotate and the maximum value of the torque at which the right rear wheel 82r is determined not to rotate by the rear axle weight is equal to or greater than the inspection criterion.

Similarly, step S16 may involve inspecting the maximum value of the torque at which the left rear wheel 82l is determined not to rotate and the maximum value of the torque at which the right rear wheel 82r is determined not to rotate. Then, it may be inspected whether the sum of the maximum value of the torque at which the left rear wheel 82l is determined not to rotate and the maximum value of the torque at which the right rear wheel 82r is determined not to rotate is equal to or greater than the inspection criterion.

When the more detailed inspection described above is performed, the inspection information creator 215 may add to the inspection information, the magnitude of the braking force, the front axle weight, and the rear axle weight obtained by the respective braking force inspections. This allows more detailed inspection information to be provided.

### F. Fifth Embodiment:

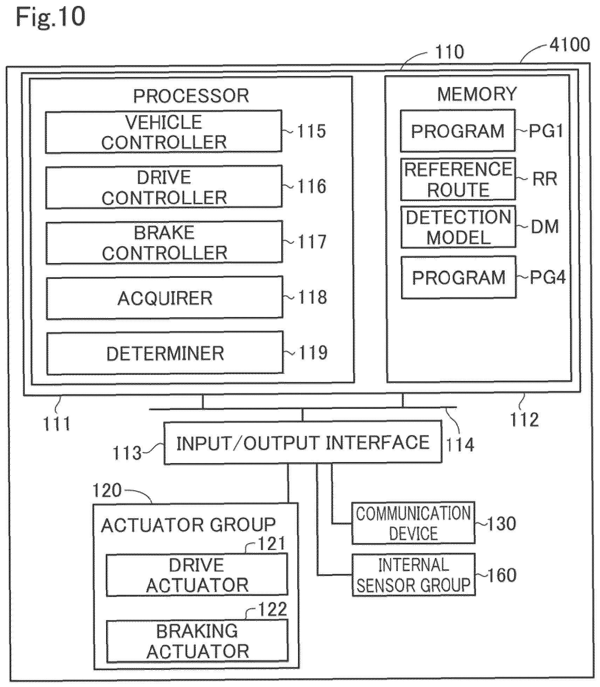

FIG. 10 is a block diagram showing the configuration of a vehicle 4100 in a present embodiment. In the first embodiment, the inspection of braking force in the inspection process is performed by the server 200 via remote control. The present embodiment differs from the first embodiment in that the braking force inspection in the present embodiment is performed by the vehicle 4100 itself. The same configurations as in the above respective embodiments are denoted by the same signs, and a detailed description thereof is omitted as appropriate.

As shown in FIG. 10, the processor 111 of the vehicle 4100 further includes a drive controller 116, a brake controller 117, an acquirer 118, and a determiner 119. The drive controller 116, the brake controller 117, the acquirer 118, and the determiner 119 are implemented by executing a program PG4 stored in the memory 112.

The drive controller 116, the brake controller 117, the acquirer 118, and the determiner 119 are provided to inspect the braking force. Since the inspection process of the present embodiment is similar to the inspection process of the first embodiment, differences therebetween will be described with reference to FIG. 4.

In the first embodiment, steps S15 and S16 are performed under the control of the drive controller 116 and the brake controller 117 in the vehicle 4100 in accordance with the inspection control signal transmitted from the server 200. For example, in step S15, the drive controller 116 activates the drive actuator 121 according to the inspection control signal for the braking force inspection of the rear wheels 82 to activate the drive actuator 121. Additionally, in step S15, the brake controller 117 activates the service brake system 151 in accordance with the inspection control signal for the braking force inspection of the rear wheels 82 to activate the service brake system 151. Then, in step S19, the determiner 119 determines whether the inspection is passed or not using the acquired rotation information.

The determiner 119 transmits the pass/fail result of the inspection to the server 200 when the start of the inspection process and the movement from the first location PL1 to the second location PL2 are controlled in an integrated manner by the server 200 for the plurality of vehicles 4100.

According to the fifth embodiment described above, the same effects as described above are achieved, and the braking force inspection is enabled without remote control by the server 200.

### G. Sixth Embodiment:

In the present embodiment, the contents of step S22 shown in FIG. 4, i.e., the contents described using FIG. 5, differ from those in the first embodiment. Only this difference will be described below.

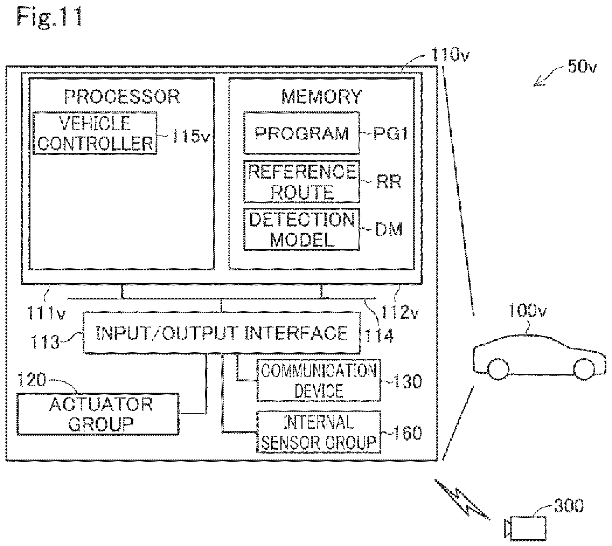

FIG. 11 is an explanatory diagram showing a schematic configuration of a system 50v in a sixth embodiment. The present embodiment differs from the first embodiment in that the system 50v does not include the server 200. In addition, a vehicle 100v in the present embodiment is capable of traveling by autonomous control of the vehicle 100v. The other configurations are the same as those in the first embodiment unless otherwise explained.

In the present embodiment, a processor 111v of a vehicle control device 110v functions as a vehicle controller 115v by executing the program PG1 stored in a memory 112v. The vehicle controller 115v enables the vehicle 100v to run via autonomous control by acquiring output results from the sensors, creating a running control signal using the output results, and operating the actuator group 120 by outputting the created running control signal. In the present embodiment, the memory 112v stores a detection model DM and a reference route RR in advance, in addition to the program PG1.

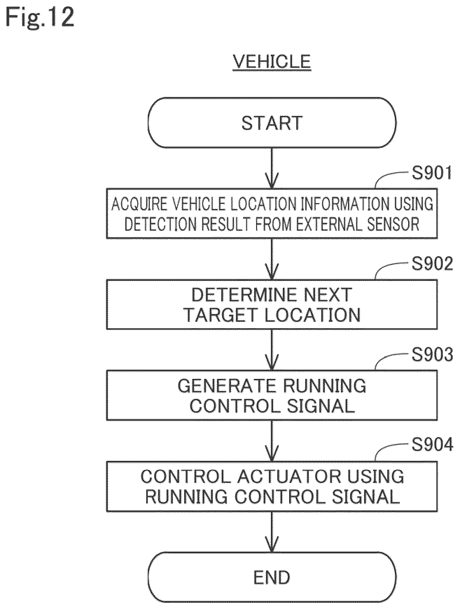

FIG. 12 is a flowchart showing the processing procedure of the running control of the vehicle 100v in the sixth embodiment. In the processing procedure of FIG. 11, the processor 111v of the vehicle 100v functions as the vehicle controller 115v by executing the program PG1.

In step S901, the processor 111v of the vehicle controller 110v acquires vehicle location information using detection result output from the camera as the external sensor 300. In step S902, the processor 111v determines a target location to which the vehicle 100v is to move next. In step S903, the processor 111v generates a running control signal for causing the vehicle 100v to run to the determined target location. In step S904, the processor 111v controls the actuator group 120 using the generated running control signal, thereby causing the vehicle 100v to run by following a parameter indicated by the running control signal. The processor 111v repeats the acquisition of vehicle location information, the determination of a target location, the generation of a running control signal, and the control over the actuator in a predetermined cycle. According to the system 50v in the present embodiment, it is possible to cause the vehicle 100v to run by autonomous control without controlling the vehicle 100v remotely using the server 200.

### H. Other Embodiments (other embodiments associated with inspection):

(H1) The drive system 140 of the first embodiment described above is provided in the vehicle 100, and the drive system 3140 of the fourth embodiment is provided separately from the vehicle 3100. In other embodiments, the drive system may be provided both inside the vehicle and outside the vehicle. Specifically, the drive system may be provided both in the vehicle 100, which is the rear-wheel drive vehicle of the first embodiment, and in the inspection rotors 3141 that drives the front wheels 81. This allows the braking force inspection using the inspection rotor 3141 of the wheel 80 mounted on the non-driven axle, for vehicles that do not have a configuration that independently controls the drive of the four wheels.

(H2) In the first embodiment above, the determination process is performed to determine whether or not the braking force satisfies the predetermined inspection criterion using the sensor information in a state where the torque and the braking force are applied to the wheels 80. In other embodiments, the determiner 214 may further perform another determination process to determine whether or not the braking force satisfies the inspection criterion using the rotation information until the vehicle 100 is stopped, by applying the torque to the wheels 80 and then applying the braking force to the wheels 80. The rotation information is information associated with the acceleration of the vehicle 100. In this embodiment, specifically, the drive controller 211 controls the application of the torque to the wheels 80 of the vehicle 100 to set the vehicle 100 in a running state. The brake controller 212 then controls the braking force such that it is applied to the wheels 80 of the vehicle 100. The determiner 214 then calculates a braking stop distance from the time the braking force is applied until the vehicle 100 stops by using the rotation information, thereby determining whether or not the braking force satisfies the inspection criterion. This enables the inspection of the braking stop distance. One specific method of calculating the braking stop distance involves determining the rotation speed of the axle 90 from the detection value of the rotation speed sensor 161, integrating the obtained rotation speed for the period from when the braking force is applied to when the vehicle 100 stops, and then multiplying the thus-obtained integrated value by an outer diameter of a tire. Another specific method of calculating the braking stop distance involves performing double integration of the detection values from the acceleration sensor 162.

(H3) In the first embodiment described above, both the rotation information and the acceleration information are used to perform the braking force inspection. In other embodiments, only the rotation information may be used to perform braking force inspection, or alternatively only the acceleration information may be used instead of the rotation information to perform braking force inspection. The rotation information for use in the first embodiment includes the detection values from the rotation speed sensor 161, which detects the rotation speed and rotation angle of the electric motor as the drive source 71. The rotation information for use in other embodiments may include the detection values from a sensor, which detects the rotation speed and rotation angle of the axle 90, for example. The rotation information may be a captured image obtained by a camera serving as the external sensors 300. The determiner 214 may determine whether the wheels 80 are rotating by using the captured image.

(H4) In the inspection process of the first embodiment, step S11, step S12, and step S13 are performed in this order, but the order in which step S11, step S12, and step S13 are performed is not limited to the order shown in FIG. 4. For example, step S13 may be performed first. Similarly, as for the braking force inspection, for example, in the inspection process of the second embodiment, the processing steps from step S14 to step S18 are performed in this order, but the order is not limited to the order shown in FIG. 6. For example, step S16 may be performed first.

### I. Other Embodiments (other embodiments associated with self-running conveyance):

(11) In each of the above-described embodiments, the external sensor is not limited to the camera but may be the distance measuring device, for example. The distance measuring device is a light detection and ranging (LiDAR) device, for example. In this case, detection result output from the external sensor 300 may be three-dimensional point cloud data representing the vehicle 100. The server 200 and the vehicle 100 may acquire the vehicle location information through template matching using the three-dimensional point cloud data as the detection result and reference point cloud data, for example.

(I2) In the above-described first embodiment, the server 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server 200 may acquire vehicle location information, determine a target location to which the vehicle 100 is to move next, and generate a route from a current location of the vehicle 100 indicated by the acquired vehicle location information to the target location. The server 200 may generate a route to the target location between the current location and a destination or generate a route to the destination. The server 200 may transmit the generated route to the vehicle 100. The vehicle 100 may generate a running control signal in such a manner as to cause the vehicle 100 to run along the route received from the server 200 and control the actuator group 120 using the generated running control signal.

(2) The server 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control the actuator group 120 using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100.The internal sensors may include, for example, a sensor that detects the state of motion of the vehicle 100, a sensor that detects the operating state of each part of the vehicle 100, and a sensor that detects the environment surrounding the vehicle 100. Specifically, the internal sensor may include a camera, LiDAR, a millimeter wave radar, an ultrasonic wave sensor, a GPS sensor, an acceleration sensor, and a gyroscopic sensor, for example. For example, in the foregoing embodiment (1), the server 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(I3) In the above-described the fourth embodiment, the vehicle 100v may be equipped with an internal sensor, and detection result output from the internal sensor may be used in at least one of generation of a route and generation of a running control signal. For example, the vehicle 100v may acquire detection result from the internal sensor, and in generating the route, may reflect the detection result from the internal sensor in the route. The vehicle 100v may acquire detection result from the internal sensor, and in generating the running control signal, may reflect the detection result from the internal sensor in the running control signal.

(I4) In the above-described the fourth embodiment, the vehicle 100v acquires vehicle location information using detection result from the external sensor. By contrast, the vehicle 100v may be equipped with an internal sensor, the vehicle 100v may acquire vehicle location information using detection result from the internal sensor, determine a target location to which the vehicle 100v is to move next, generate a route from a current location of the vehicle 100v indicated by the acquired vehicle location information to the target location, generate a running control signal for running along the generated route, and control the actuator group 120 using the generated running control signal. In this case, the vehicle 100v is capable of running without using any detection result from an external sensor. The vehicle 100v may acquire target arrival time or traffic congestion information from outside the vehicle 100v and reflect the target arrival time or traffic congestion information in at least one of the route and the running control signal. The functional configuration of the system 50v may be entirely provided at the vehicle 100v. Specifically, the processes realized by the system 50v in the present disclosure may be realized by the vehicle 100v alone.

(I5) In the above-described first embodiment, the server 200 automatically generates a running control signal to be transmitted to the vehicle 100. By contrast, the server 200 may generate a running control signal to be transmitted to the vehicle 100 in response to operation by an external operator existing outside the vehicle 100. For example, the external operator may operate an operating device including a display on which a captured image output from the external sensor 300 is displayed, steering, an accelerator pedal, and a brake pedal for operating the vehicle 100 remotely, and a communication device for making communication with the server 200 through wire communication or wireless communication, for example, and the server 200 may generate a running control signal responsive to the operation on the operating device.

(I6) In each of the above-described embodiments, the vehicle 100 is simply required to have a configuration to become movable by unmanned driving. The vehicle 100 may embodied as a platform having the following configuration, for example. The vehicle 100 is simply required to include at least the vehicle controller 110 and the actuator group 120 in order to fulfill three functions including "run," "turn," and "stop" by unmanned driving. In order for the vehicle 100 to acquire information from outside for unmanned driving, the vehicle 100 is simply required to include the communication device 130 further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from the factory FC, or a remaining component such as a bodyshell may be mounted on the vehicle 100 after the vehicle 100 is shipped from the factory FC while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(I7) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(I8) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(I9) In each of the embodiments described above, some or all of the functions and processes that are implemented by software may also be implemented by hardware. Further, some or all of the functions and processes that are implemented by hardware may also be implemented by software. Examples of the hardware used to implement various functions in each of the embodiments described above include various circuits, such as integrated circuits and discrete circuits.

(I10) In the first embodiment described above, the determiner 214 determines whether the inspection is passed or not using the acquired sensor information. In other embodiments, for example, an operator may determine whether the inspection is passed or not. For example, in step S16, the operator may visually determine whether or not the rear wheels 82 rotate.

The present disclosure is not limited to the embodiments described above and is able to be realized with various configurations without departing from the spirit thereof. For example, technical features in the embodiments corresponding to the technical features in the aspects described in the section of SUMMARY are able to be replaced with each other or combined together as necessary in order to solve part or the whole of the problems described previously or to achieve part or the whole of the effects described previously. When the technical features are not described as essential features in the present specification, they are able to be deleted as necessary.

## Claims

1. A control device (200) for inspecting a braking force of a moving object (100), comprising:
a drive controller (211) configured to remotely control a drive system (140) in a braking force inspection such that a predetermined magnitude of torque is applied to at least one wheel (80) included in the moving object (100), the drive system (140) being configured to apply a torque for rotating the at least one wheel (80) to the at least one wheel (80); and
a brake controller (212) configured to remotely control a brake system (150) in the inspection, the brake system (150) being configured to generate the braking force in the moving object (100).

2. The control device (200) according to claim 1, further comprising:
an acquirer (213) configured to acquirer (213) otation information associated with a rotated state of the at least one wheel (80); and
a determiner (214) configured to perform a determination process to determine whether or not the braking force satisfies a predetermined inspection criterion using the rotation information in a state where the torque and the braking force are applied to the at least one wheel (80).

3. The control device (200) according to claim 2, wherein
the at least one wheel (80) includes a plurality of wheels, and
the drive controller (211) is configured to independently control each of the plurality of wheels.

4. The control device (200) according to claim 2, wherein the determiner (214) is configured to determine in the determination process that the inspection criterion is satisfied when the at least one wheel (80) does not rotate.

5. The control device (200) according to claim 2, wherein
the at least one wheel (80) includes a right wheel and a left wheel, and
the control device (200) is configured to repeatedly perform an inspection processing routine by changing a magnitude of the torque, wherein,
in the inspection processing routine, the drive controller (211) is configured to control the drive system (140) such that a predetermined torque is applied to the at least one wheel (80),
the brake controller (212) is configured to control the brake system (150) so as to apply a predetermined braking force to the at least one wheel (80), and
the determiner (214) is configured to determine in the determination process that the inspection criterion is satisfied when a difference between a minimum value of a torque at which the right wheel is determined to rotate and a minimum value of a torque at which the left wheel is determined to rotate is equal to or less than a predetermined threshold value.

6. The control device (200) according to claim 2, further comprising: an inspection information creator (215) configured to create inspection information that associates information related to the torque, information related to the braking force, and information related to the determination made by the determiner (214) with one another.

7. The control device (200) according to any one of claims 1 to 6, wherein the drive system (140) includes an electric motor (71) that generates the torque.

8. The control device (200) according to claim 7, wherein the moving object (100) includes the drive system (140).

9. The control device (200) according to claim 7, wherein
the drive system (140) further includes an inspection rotor (3141), and
the electric motor (71) drives the inspection rotor.

10. A control device (200) for inspecting a braking force of a moving object (100), comprising:
a drive controller (211) configured to control a drive system (140) that applies a torque for rotating at least one wheel (80) included in the moving object (100) to the at least one wheel (80);
a brake controller (212) configured to control a brake system (150) that generates the braking force in the moving object (100);
an acquirer (213) configured to acquire information associated with an acceleration of the moving object (100); and
a determiner (214) configured to perform a determination process to determine whether or not the braking force satisfies a predetermined inspection criterion using the information associated with the acceleration of the moving object (100) in a state where the torque and the braking force are applied to the at least one wheel (80).

11. The control device (200) according to claim 10, wherein
the determiner (214) is configured to acquire, as the information associated with the acceleration of the moving object (100), rotation information until the moving object (100) is stopped by applying the torque to at least one wheel (80) and then applying the braking force to the at least one wheel (80), and
the determiner (214) is configured to perform the determination process by using the rotation information.

12. An inspection system (50) for inspecting a braking force of a moving object (100), comprising:
a drive system (140) that applies a torque for rotating at least one wheel (80) included in the moving object (100) to the at least one wheel (80),
an acquirer (213) configured to acquirer (213) otation information associated with a rotated state of the at least one wheel (80); and
a control device (200), wherein
the moving object (100) has a brake system (150) that generates the braking force,
the control device (200) includes a drive controller (211) configured to control the drive system (140), and a brake controller (212) configured to control the brake system (150), and
the inspection system (50) further comprises a determiner (214) configured to perform a determination process to determine whether or not the braking force satisfies a predetermined inspection criterion using the rotation information in a state where the torque and the braking force are applied to the at least one wheel (80).

13. A moving object (100), comprising:
at least one wheel (80) to which a torque is applied by a drive system (140) through control of the drive system (140) by a drive controller (211);
a brake system (150) controlled by a brake controller (212) and configured to generate a braking force in the moving object (100);
an acquirer (213) configured to acquirer (213) otation information associated with a rotated state of the at least one wheel (80); and
a determiner (214) configured to perform a determination process to determine whether or not the braking force satisfies a predetermined inspection criterion using the rotation information in a state where the torque and the braking force are applied to the at least one wheel (80).

14. An inspection method for inspecting a braking force of a moving object (100), the moving object (100) comprising at least one wheel (80), a drive system (140) that applies a torque to the at least one wheel (80), and a brake system (150) that generates the braking force therein, the inspection method comprising:
remotely controlling the brake system (150);
remotely controlling the drive system (140);
acquiring rotation information associated with a rotated state of the at least one wheel (80); and
performing a determination process to determine whether or not the braking force satisfies a predetermined inspection criterion using the rotation information.

15. A method for manufacturing a moving object (100), the method comprising:
assembling the moving object (100) such that the moving object (100) includes the brake system (150) that generates a braking force; and
inspecting an operation of the moving object (100) assembled to include the brake system (150), wherein
the inspection step comprises at least the inspection method according to claim 14.
